# EUROPÄISCHE PATENTSCHRIFT

(11) **EP 3 823 113 B1**
(45) Veröffentlichungstag und Bekanntmachung des Hinweises auf die Patenterteilung: **16.08.2023**
(21) Anmeldenummer: 19209367.2
(22) Anmeldetag: 15.11.2019
(51) Int. Cl.: H02B 1/14, H02B 1/20

(54) **BERÜHRSCHUTZEINRICHTUNG FÜR EINE STROMSCHIENE UND BERÜHRSCHUTZSYSTEM**
TOUCH PROTECTION DEVICE FOR A BUSBAR AND TOUCH PROTECTION SYSTEM
DISPOSITIF DE PROTECTION CONTRE LES CONTACTS POUR UN RAIL ÉLECTRIQUE ET SYSTÈME DE PROTECTION CONTRE LES CONTACTS

(43) Veröffentlichungstag der Anmeldung: 19.05.2021
(73) Patentinhaber: Jean Müller GmbH Elektrotechnische Fabrik, 65343 Eltville am Rhein (DE)
(72) Erfinder: Müller, Nicolas Johannes, 65343 Eltville am Rhein (DE)
(74) Vertreter: Franke, Markus

(56) Entgegenhaltungen:
- EP-A1- 2 019 465
- EP-A1- 3 258 558
- EP-A1- 3 419 125
- EP-A2- 0 170 161
- DE-A1-102004 019 172

## Beschreibung

Die vorliegende Erfindung betrifft eine Berührschutzeinrichtung für eine Stromschiene, insbesondere für eine Stromsammelschiene sowie ein Berührschutzsystem. Stromschienen bzw. Stromsammelschienen dienen typischerweise zur elektrischen Stromversorgung von Schaltgeräten. Sammelschienen umfassen typischerweise eine Anordnung von Stromleitern, typischerweise von Stromschienen, die zur Verteilung von elektrischer Energie dienen.

Um einen ungewollten Kontakt mit der Stromschiene zu vermeiden, sind aus dem Stand der Technik unterschiedliche Berührschutzsysteme bzw. Berührschutzeinrichtungen bekannt. Beispielsweise ist aus der EP 2 037 550 A1 ein Berührschutz bekannt, der als Gehäuse ausgebildet ist, das die Schiene vollständig umgibt, wobei das Gehäuse ein erstes Gehäuseteil, das mit Kontaktierungsschlitzen versehen ist, und zweites Gehäuseteil, das ebenfalls mit Kontaktierungsschlitzen versehen ist, aufweist, wobei die beiden Gehäuseteile miteinander verbindbar sind.

Weitere Berührschutzeinrichtungen und Berührschutzsysteme sind aus der EP 3 258 558 A1 sowie der EP 2 863 496 A1 bekannt.

Aus der DE 10 2004 019 172 A1 ist ferner ein Installationsschaltgerät oder Zwischenteil für ein Installationsschaltgerät bekannt, das auf Stromschienen einer elektrischen Einrichtung anordenbar ist.

Aus der EP 0 170 161 A2 ist ein weiteres Installationsgerät bekannt, das auf ein Sammelschienensystem anordenbar ist.

Aus der EP 2 019 465 A1 ist ein Sicherheitstrennschalter mit einem auf ein Sammelschienensystem aufzusetzenden Adapter bekannt, der eine einschiebbare Schienenschirmung aufweist.

Aus der EP 3 419 125 A1 ist eine Berührschutzeinrichtung bekannt, die die Merkmale des Oberbegriffs des Patentanspruchs 1 aufweist. Die EP 3 419 125 A1 offenbart eine Berührschutzeinrichtung für eine Stromschiene, wobei die Berührschutzeinrichtung einen Abdeckkörper aufweist, wobei der Abdeckkörper einen Aufnahmebereich zum Aufnehmen der Stromschiene aufweist, wobei der Abdeckkörper einen Abdeckabschnitt zum frontseitigen Abdecken der Stromschiene aufweist, wobei der Abdeckkörper einen Halteabschnitt aufweist, wobei ein Teilbereich des Halteabschnitts des Abdeckkörpers bei in dem Aufnahmebereich angeordneter Stromschiene die Stromschiene auf einer dem Abdeckabschnitt abgewandten Seite hintergreift. Ferner weist die Berührschutzeinrichtung ein Halteelement auf, wobei das Halteelement als flexibles Element ausgebildet und in dem Abdeckabschnitt ausgebildet ist. Das flexible Halteelement weist zumindest einen Vorsprung auf, wobei der Vorsprung bei in dem Aufnahmebereich angeordneter Stromschiene auf einer dem Halteabschnitt abgewandten schmaleren Seite der Stromschiene die Stromschiene kontaktiert. Dadurch wird die Stromschiene gehalten und eine vertikale Bewegung der Berührschutzeinrichtung und somit ein ungewolltes Abnehmen der Berührschutzeinrichtung von der Stromschiene verhindert. Um Stromschienen unterschiedlicher Abmessungen zu halten, ist aus der EP 3 419 125 A1 bekannt, dass das flexible Element mehrere voneinander vertikal beabstandete Vorsprünge aufweist und/oder die Berührschutzeinrichtung mehrere in vertikaler Richtung beabstandete flexible Elemente aufweist.

Aufgabe der vorliegenden Erfindung ist es, eine Berührschutzeinrichtung, die die Merkmale des Oberbegriffs des Patentanspruchs 1 aufweist, derart weiterzubilden, dass die Anbringung der Berührschutzeinrichtung an die Stromschiene besonders einfach möglich ist, bei dennoch sicherem Verhindern eines unbeabsichtigten Lösens der Berührschutzeinrichtung von der Stromschiene. Ferner soll mittels des Halteelements eine möglichst einfach Anpassung der Berührschutzeinrichtung an unterschiedliche Stromschienen ermöglicht sein. Ferner ist es Aufgabe der Erfindung, ein Berührschutzsystem mit den vorgenannten Vorteilen zu schaffen, wobei das Berührschutzsystem zudem eine flexible Anpassung an die Anordnung der Stromschiene und den zu überdeckenden Bereich ermöglichen soll.

Diese Aufgaben werden durch eine Berührschutzeinrichtung, die die Merkmale des Patentanspruchs 1 aufweist, und ferner durch ein Berührschutzsystem, das die Merkmale des Patentanspruchs 15 aufweist, gelöst.

Die Berührschutzeinrichtung dient dem Abdecken einer Stromschiene. Die Berührschutzeinrichtung weist einen Abdeckkörper auf, wobei der Abdeckkörper einen Aufnahmebereich zum Aufnehmen der Stromschiene aufweist, wobei der Abdeckkörper einen Abdeckabschnitt zum frontseitigen Abdecken der Stromschiene aufweist, wobei der Abdeckkörper einen Halteabschnitt aufweist, wobei ein Teilbereich des Halteabschnitts des Abdeckkörpers bei in dem Aufnahmebereich angeordneter Stromschiene die Stromschiene auf einer dem Abdeckabschnitt abgewandten Seite hintergreift, wobei die Berührschutzeinrichtung ein Halteelement aufweist.

Bei der erfindungsgemäßen Berührschutzeinrichtung ist vorgesehen, dass das Halteelement in einem Führungsabschnitt des Abdeckkörpers verschiebbar gelagert ist, zur Veränderung eines Abstands zwischen dem Halteabschnitt und dem Halteelement. Durch die verschiebbare Lagerung des Halteelements kann in besonders einfacher Art und Weise eine Anpassung an Abmessungen der abzudeckenden Stromschiene erfolgen bzw. dieselbe Berührschutzeinrichtung für Stromschienen unterschiedlicher Stärke bzw. unterschiedlicher Abmessung verwendet werden. Durch das Halteelement kann ein unbeabsichtigtes Lösen der Berührschutzeinrichtung von der Stromschiene verhindert werden, da das Halteelement ein unbeabsichtigtes Verschieben der Berührschutzeinrichtung bezüglich der Stromschiene in eine Richtung zum Lösen der Berührschutzeinrichtung von der Stromschiene verhindert bzw. ein unbeabsichtigtes Verschieben der Berührschutzeinrichtung in eine Position verhindert, in der die Stromschiene nicht mehr derart angeordnet ist, dass der Halteabschnitt die Stromschiene hintergreift. Das Halteelement bildet insofern einen Anschlag der Berührschutzeinrichtung, der ein weiteres Verschieben der Berührschutzeinrichtung bezüglich der Stromschiene in der vorgenannten Art und Weise und somit ein unbeabsichtigtes Lösen verhindert. Durch die Verschiebbarkeit des Halteelements kann ein unbeabsichtigtes Lösen für unterschiedliche Stromschienen mit derselben Berührschutzeinrichtung erreicht werden.

Trotz des Haltelements ist das Verbinden der Berührschutzeinrichtung mit der Stromschiene, insbesondere ein Einhängen der Berührschutzeinrichtung in die Stromschiene, besonders einfach möglich, da zwecks Verbindens der Berührschutzeinrichtung mit der Stromschiene das Halteelement derart bezüglich des Halteabschnitts verschoben werden kann, dass der Abstand zwischen dem Halteabschnitt und dem Halteelement relativ groß ist, sodass die Stromschiene in einfacher Art und Weise in den Aufnahmebereich eingeführt werden kann. Insofern kann das Halteelement zwecks Verbinden der Berührschutzeinrichtung mit der Stromschiene in eine Position gebracht werden, in der das Halteelement ein Verbinden der Berührschutzeinrichtung mit der Stromschiene weder verhindert, noch erschwert. Nach dem Einführen der Stromschiene in den Aufnahmebereich, derart dass der Halteabschnitt die Stromschiene hintergreift, kann das Halteelement in Richtung des Halteabschnitts verschoben werden, sodass der Abstand zwischen dem Halteabschnitt und dem Halteelement relativ klein ist. Dadurch kann ein unbeabsichtigtes Verschieben der Berührschutzeinrichtung und somit ein Lösen der Berührschutzeinrichtung von der Stromschiene in der vorgenannten Art und Weise verhindert werden.

Es ist durchaus denkbar, dass ein Teilbereich des Abdeckabschnitts einen Teilbereich des Führungsabschnitts bildet.

Als besonders vorteilhaft wird es angesehen, wenn das Halteelement derart verschiebbar ist, dass das Halteelement eine in dem Aufnahmebereich angeordnete Stromschiene kontaktiert.

Es ist vorgesehen, dass das Halteelement in zumindest einer Verschiebestellung formschlüssig, insbesondere rastierend, mit dem Abdeckkörper zusammenwirkt. Dadurch wird ein ungewolltes Verschieben des Halteelements vermieden. In diesem Zusammenhang wird es als besonders vorteilhaft angesehen, wenn das Halteelement in mehreren Verschiebestellungen formschlüssig, insbesondere rastierend mit dem Abdeckkörper zusammenwirkt. Dabei ist es durchaus denkbar, dass die mehreren Verschiebestellungen,
insbesondere die mehreren Raststellungen, zu unterschiedlichen Stromschienen-Abmessungen korrespondieren.

In einer bevorzugten Weiterbildung ist vorgesehen, dass das Halteelement einen Halteabschnitt aufweist, wobei ein Teilbereich des Halteabschnitts bei in dem Aufnahmebereich angeordneter Stromschiene die Stromschiene auf der dem Abdeckabschnitt abgewandten Seite hintergreift. Durch eine derartige Ausbildung des Halteelements ist die Stromschiene besonders sicher in dem Bereich zwischen dem Halteabschnitt des Abdeckkörpers und dem Halteabschnitt des Halteelements gehalten.

Um Stromschienen unterschiedlicher Stärke zu halten, wird es als besonders vorteilhaft angesehen, wenn der Halteabschnitt des Halteelements und/oder der Halteabschnitt des Abdeckkörpers ein stufenförmiges Profil aufweisen. Durch das Verschieben des Halteelements kann somit die Berührschutzeinrichtung an eine Querabmessung der Stromschiene angepasst werden, wobei aufgrund des stufenförmigen Profils des Halteabschnitts des Halteelements und/oder des Halteabschnitts des Abdeckkörpers eine besonders sichere Lagerung von Stromschienen unterschiedlicher Stärke gewährleistet ist. Die Stärke entspricht dabei einer Abmessung der Stromschiene senkrecht zu der Querrichtung und senkrecht zu einer Längsrichtung der Stromschiene.

In einer bevorzugten Ausführungsform weist der Führungsabschnitt einen Führungsschlitz auf, wobei das Halteelement in dem Führungsschlitz verschiebbar geführt ist. Vorzugsweise durchsetzt das Halteelement den Führungsschlitz. Vorzugsweise erstreckt sich der Führungsschlitz senkrecht zu einer Längserstreckung einer in dem Aufnahmebereich angeordneten Stromschiene.

Hinsichtlich des Führungsschlitzes wird es als besonders vorteilhaft angesehen, wenn der Abdeckkörper einen in den Führungsschlitz mündenden Entnahmeabschnitt aufweist, zum Entnehmen und Einführen des Halteelements. Dadurch ist die Herstellung und die Montage der Berührschutzeinrichtung vereinfacht. Zudem ist durch eine derartige Ausführungsform in einfacher Art und Weise der Austausch eines defekten Halteelements möglich. Ferner ist es bei einer derartigen Ausführungsform möglich, die Berührschutzeinrichtung im Wesentlichen aus Gleichteilen zu fertigen. So kann beispielsweise der Abdeckkörper für unterschiedliche Stromschienen verwendet werden, wobei eine Anpassung der Berührschutzeinrichtung an unterschiedliche Stromschienen durch Verwendung unterschiedlicher Halteelemente verwirklicht werden kann.

Als besonders vorteilhaft hinsichtlich des Entnahmeabschnitts wird es angesehen, wenn das Halteelement im Bereich des Entnahmeabschnitts quer zu der Verschieberichtung, insbesondere senkrecht zu der Verschieberichtung entnehmbar und einführbar ist.

Ferner wird es als vorteilhaft angesehen, wenn der Entnahmeabschnitt eine den Abdeckkörper durchsetzende, an den Führungsschlitz angrenzende Öffnung aufweist, wobei die Öffnung eine gegenüber dem angrenzenden Führungsschlitz größere Breitenerstreckung aufweist.

In einer bevorzugten Ausführungsform ist vorgesehen, dass das Halteelement einen Kopfabschnitt aufweist, wobei der Kopfabschnitt an einer Frontseite der Berührschutzeinrichtung angeordnet ist. In einer bevorzugten Ausführungsform ist vorgesehen, dass der Führungsabschnitt eine Führungsnut zur Aufnahme des Kopfabschnitts aufweist. Dadurch ist das Halteelement besonders gut in dem Führungsabschnitt geführt.

Es wird als vorteilhaft angesehen, wenn der Abdeckkörper parallel angeordnete Kontaktierungsschlitze aufweist, zur elektrischen Kontaktierung der Stromschiene mittels einer Anschlussklemme. In diesem Zusammenhang wird es als vorteilhaft angesehen, wenn der Abdeckkörper zwei bezüglich des Aufnahmebereichs gegenüberliegend ausgebildete Stirnabschnitte aufweist, wobei zumindest einer der Stirnabschnitte einen Einführbereich zum Einführen der Anschlussklemme aufweist.

Um eine einfache Anpassung der Berührschutzeinrichtung an den abzudeckenden Bereich der Stromschiene zu ermöglichen, wird es als vorteilhaft angesehen, wenn der Abdeckkörper mehrere Segmente aufweist, wobei der Abdeckkörper zwischen einander angrenzenden Segmenten eine Materialschwächung aufweist. Aufgrund der Materialschwächung im Bereich zwischen den Segmenten kann eine einfache Abtrennung benachbarter Segmente erfolgen, wodurch in einfacher Art und Weise eine Anpassung des Abdeckkörpers an den zu überdeckenden Bereich der Stromschiene erfolgen kann. Vorzugsweise verläuft die Materialschwächung senkrecht zu einer Längserstreckung des Aufnahmebereichs, sodass durch ein Abtrennen eines äußeren Segments der Berührschutzeinrichtung die Längserstreckung des Aufnahmebereichs angepasst werden kann.

Bezüglich des Merkmals, demnach der Abdeckkörper mehrere Segmente aufweist, wobei der Abdeckkörper zwischen einander angrenzenden Segmenten eine Materialschwächung aufweist, sei darauf hingewiesen, dass dieses Merkmal grundsätzlich unabhängig von dem Halteelement verwirklicht sein kann. Insofern betrifft die Erfindung ferner eine Berührschutzeinrichtung für eine Stromschiene, wobei die Berührschutzeinrichtung einen Abdeckkörper aufweist, wobei der Abdeckkörper einen Aufnahmebereich zum Aufnehmen der Stromschiene aufweist, wobei der Abdeckkörper einen Abdeckabschnitt zum frontseitigen Abdecken der Stromschiene aufweist, wobei der Abdeckkörper mehrere Segmente aufweist, wobei der Abdeckkörper zwischen einander angrenzenden Segmenten eine Materialschwächung aufweist.

Vorzugsweise ist die Materialschwächung senkrecht zu einer Längserstreckung des Aufnahmebereichs ausgebildet. Somit kann durch Abtrennen von einem oder mehreren Segmenten in einfacher Art und Weise eine Anpassung der Längserstreckung des Aufnahmebereichs erfolgen.

Als besonders vorteilhaft wird es angesehen, wenn der Führungsschlitz einen Teilbereich der Materialschwächung bildet.

In einer besonders bevorzugten Ausführungsform ist vorgesehen, dass die Berührschutzeinrichtung als Berührschutzmodul ausgebildet ist, wobei das Berührschutzmodul einen einzigen Aufnahmebereich aufweist. Unter dem Begriff Berührschutzmodul wird vorliegend verstanden, dass die Berührschutzeinrichtung mit weiteren Berührschutzeinrichtungen, die ebenfalls als Berührschutzmodul ausgebildet sind, kombiniert werden kann, um auf diese Weise ein Berührschutzsystem, bestehend aus mehreren Berührschutzmodulen zu schaffen, wodurch eine einfache Anpassung an die Längserstreckung der abzudeckenden Stromschiene und/oder an unterschiedliche Stromsammelschienensysteme, insbesondere eine Anpassung hinsichtlich des Abstands der Stromsammelschienen des jeweiligen Stromsammelschienensystems, ermöglicht ist.

Das erfindungsgemäße Berührschutzsystem umfasst zumindest zwei Berührschutzeinrichtungen, die als Berührschutzmodule ausgebildet sind und jeweils einen einzigen Aufnahmebereich aufweisen, wobei die Berührschutzmodule derart angeordnet sind, dass die Aufnahmebereiche der Berührschutzmodule einen gemeinsamen Aufnahmebereich zur Aufnahme derselben Stromschiene bilden, wobei Formschlussmittel der Berührschutzmodule ein Verschieben der Berührschutzmodule zueinander in einer Längsrichtung der Stromschiene verhindern, oder wobei die Berührschutzmodule derart angeordnet sind, dass die Aufnahmebereich der Berührschutzmodule zwei voneinander beabstandete Aufnahmebereiche bilden, zur Aufnahme von jeweils einer Stromschiene, wobei Formschlussmittel der Berührschutzmodule ein Verschieben der Berührschutzmodule zueinander in einer Längsrichtung der Stromschienen verhindern.

Als besonders vorteilhaft wird es angesehen, wenn die Berührschutzmodule ineinander einsteckbar sind und/oder die Formschlussmittel rastierend zusammenwirken.

### Figurenbeschreibung

In den Figuren ist die Erfindung anhand eines Ausführungsbeispiels dargestellt, ohne hierauf beschränkt zu sein.

Es zeigen:
- Fig. 1: eine Anordnung einer Stromschiene und einer Ausführungsform einer Berührschutzeinrichtung mit einem Halteelement in einer Verschiebestellung in einer ersten perspektivischen Ansicht,
- Fig. 2: die Anordnung gemäß Fig. 1 mit dem Halteelement in einer anderen Verschiebestellung in einer zweiten perspektivischen Ansicht,
- Fig. 3: ein Halteelement der Berührschutzeinrichtung gemäß Fig. 1 in einer perspektivischen Ansicht,
- Fig. 4: die Anordnung gemäß Fig. 1 in einer Schnittansicht,
- Fig. 5: die Anordnung gemäß Fig. 2 in einer Schnittansicht,
- Fig. 6: ein Berührschutzsystem, gebildet aus mehreren Berührschutzeinrichtungen gemäß Fig. 1 in einer perspektivischen Ansicht,
- Fig. 7: die Anordnung gemäß Fig. 6 in einer Draufsicht.

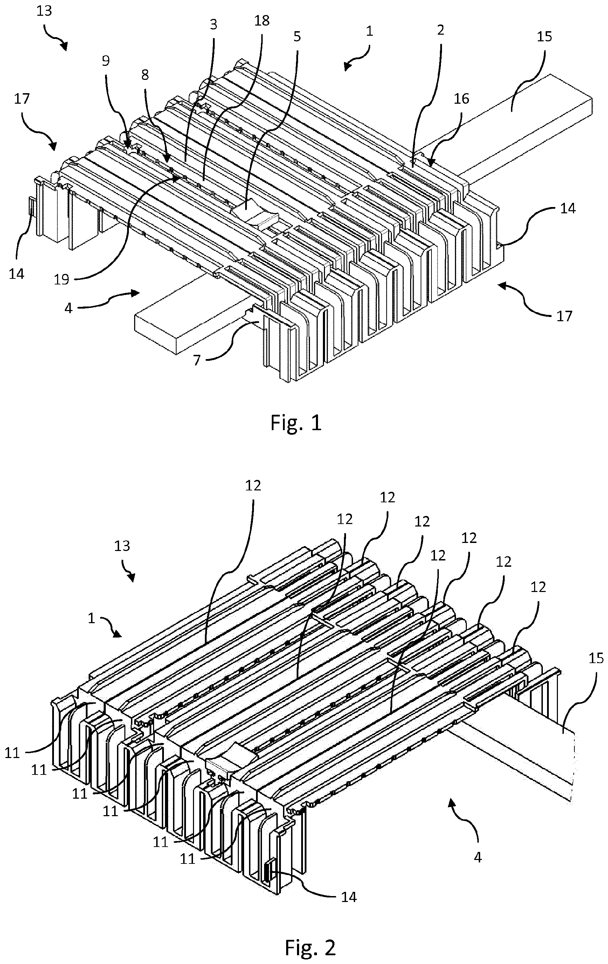

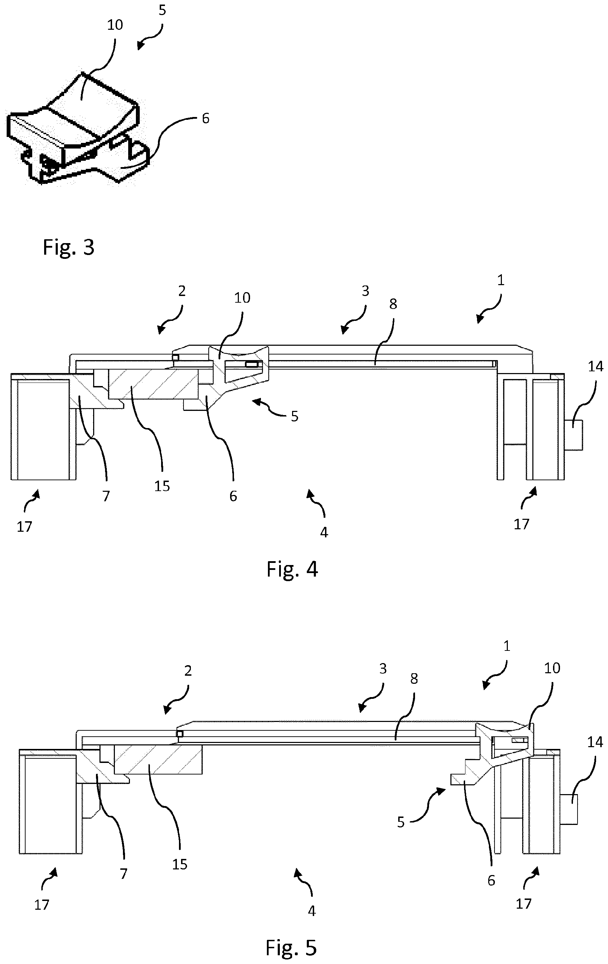

Die Fig. 1 bis 7 zeigen eine Ausführungsform der Berührschutzeinrichtung 13 bzw. ein Berührschutzsystem gebildet aus mehreren derartigen Berührschutzeinrichtungen 13. Die Berührschutzeinrichtung dient dem Abdecken einer Stromschiene 15, um eine ungewollte Kontaktierung der Stromschiene 15 zu vermeiden. Die Berührschutzeinrichtung 13 weist einen Abdeckkörper 1 auf, wobei der Abdeckkörper 1 einen Aufnahmebereich 4 zum Aufnehmen der Stromschiene 15 aufweist. Der Abdeckkörper 1 weist einen Abdeckabschnitt 2 zum frontseitigen Abdecken der Stromschiene 15 auf. Der Abdeckkörper 1 weist einen Halteabschnitt 7 auf, wobei ein Teilbereich des Halteabschnitts 7 des Abdeckkörpers 1 bei in dem Aufnahmebereich 4 angeordneter Stromschiene 15 die Stromschiene 15 auf einer dem Abdeckabschnitt 2 abgewandten Seite hintergreift. Dies ist insbesondere den Schnittansichten der Fig. 4 und 5 zu entnehmen.

Typischerweise ist die abzudeckende Stromschiene 15 mit ihrer Längserstreckung horizontal angeordnet, sodass die Berührschutzeinrichtung 13 mittels des Halteabschnitts 7 in die Stromschiene 15 eingehängt wird. Ein Teilbereich des Halteabschnitts 7 liegt somit an einer Seite der Stromschiene 15 an und ein Teilbereich des Halteabschnitts 7 hintergreift die Stromschiene 15 auf einer anderen Seite, nämlich auf einer dem Abdeckabschnitt 2 abgewandten Seite. Der Halteabschnitt 7 ist somit in der Regel oberhalb bzw. im oberen Bereich der Stromschiene 15 angeordnet, sodass die Berührschutzeinrichtung 13 bei einer derartigen Anordnung zwecks Lösen der Berührschutzeinrichtung 13 von der Stromschiene 15 vertikal nach oben bewegt werden müsste.

Um ein ungewolltes Lösen der Berührschutzeinrichtung 13 von der Stromschiene 15 zu vermeiden, weist die Berührschutzeinrichtung 13 ein Halteelement 5 auf, wobei das Halteelement 5 in einem Führungsabschnitt 3 des Abdeckkörpers 1 verschiebbar gelagert ist, zur Veränderung eines Abstands zwischen dem Halteabschnitt 7 und dem Halteelement 5. Die Fig. 1 zeigt das Halteelement 5 in einer Verschiebestellung, in der das Halteelement 5 die Stromschiene 15 auf einer dem Halteabschnitt 7 des Abdeckkörpers 1 abgewandten Seite kontaktiert. Eine entsprechende Schnittansicht, mit dem Halteelement 5 in dieser Verschiebestellung, zeigt die Fig. 4. Die Fig. 2 und die korrespondierende Schnittansicht der Fig. 5 zeigen das Halteelement 5 in einer anderen Verschiebestellung, in der ein Verschieben der Berührschutzeinrichtung 13 in eine Stellung möglich, in der der Halteabschnitt 7 die Stromschiene 15 nicht mehr hintergreift und somit die Berührschutzeinrichtung 13 von der Stromschiene 15 entfernt bzw. gelöst werden kann. Wie insbesondere einem Vergleich der Fig. 4 und 5 zu entnehmen ist, ist es in der in der Fig. 5 dargestellten Verschiebestellung in einfacher Art und Weise möglich, die Stromschiene 15 derart in den Aufnahmebereich 4 einzubringen, dass der Halteabschnitt 7 des Abdeckkörpers 1 die Stromschiene 15 kontaktiert. Insbesondere kann die Berührschutzeinrichtung 13 mit dem Halteelement 5 in der in der Fig. 5 dargestellten Verschiebestellung in einfacher Art und Weise in die Stromschiene 15 eingehängt werden.

Wie insbesondere den Fig. 4 und 5 zu entnehmen ist, weist das Halteelement 5 einen Halteabschnitt 6 auf, wobei ein Teilbereich des Halteabschnitts 6 bei in dem Aufnahmebereich 4 angeordneter Stromschiene 15 die Stromschiene 15 auf der dem Abdeckabschnitt 2 abgewandten Seite hintergreift. Insofern ist der Halteabschnitt 6 des Halteelements 5 ähnlich gestaltet wie der Halteabschnitt 7 des Abdeckkörpers 1. Sowohl der Halteabschnitt 6 des Halteelements 5 als auch der Halteabschnitt 7 des Abdeckkörpers 1 weisen zudem ein stufenförmiges Profil auf, um Stromschienen 15 unterschiedlicher Stärke zuverlässig zu hintergreifen.

Vorliegend ist die Führung des Halteelements 5 in dem Führungsabschnitt 3 durch einen Führungsschlitz 8 verwirklicht, wobei das Halteelement 5 den Führungsschlitz 8 durchsetzt. Der Führungsschlitz 8 erstreckt sich dabei senkrecht zu der Längserstreckung der Stromschiene 15, somit in vertikaler Richtung.

Der Führungsschlitz 8 weist mehrere in der vertikalen Richtung beabstandete Rücksprünge 19 auf, die mit einem Rastmittel des Halteelements 5 rastierend zusammenwirken. Bei dem Rastelement kann es sich beispielsweise um einen flexibel gelagerten Vorsprung handeln.

Um ein Einführen bzw. ein Entnehmen des Halteelements 5 in den bzw. aus dem Führungsschlitz 8 zu ermöglichen, weist der Abdeckkörper 1 einen in den Führungsschlitz 8 mündenden Entnahmeabschnitt 9 auf, wobei das Halteelement 5 im Bereich des Entnahmeabschnitts 9 quer zu der Verschieberichtung entnehmbar und einführbar ist. Zu diesem Zweck weist der Entnahmeabschnitt 9 eine den Abdeckkörper 1 durchsetzende, an den Führungsschlitz 8 angrenzende Öffnung auf, wobei die Öffnung eine gegenüber dem angrenzenden Führungsschlitz 8 größere Breitenerstreckung aufweist.

Das Halteelement 5 weist einen mit dem Halteabschnitt 6 verbundenen Kopfabschnitt 10 auf, wobei der Kopfabschnitt 10 auf einer der Stromschiene 15 abgewandten Seite des Abdeckabschnitts, somit frontseitig, angeordnet ist. Der Führungsabschnitt 3 weist eine Führungsnut 18 zur Aufnahme des Kopfabschnitts 10 auf.

Der Abdeckkörper 1 weist ferner mehrere parallel angeordnete Kontaktierungsschlitze 16 auf, zur elektrischen Kontaktierung der Stromschiene 15 mittels einer nicht weiter dargestellten Anschlussklemme. Zudem weist der Abdeckkörper 1 zwei bezüglich des Aufnahmebereichs 4 gegenüberliegend ausgebildete Stirnabschnitte 17 auf, wobei zumindest einer der Stirnabschnitte 17 einen Einführbereich zum Einführen der Anschlussklemme aufweist.

Bei der in den Figuren 1 bis 5 dargestellten Ausführungsform der Berührschutzeinrichtung 13 ist die Berührschutzeinrichtung 13 als Berührschutzmodul ausgebildet, wobei das Berührschutzmodul einen einzigen Aufnahmebereich 4 aufweist.

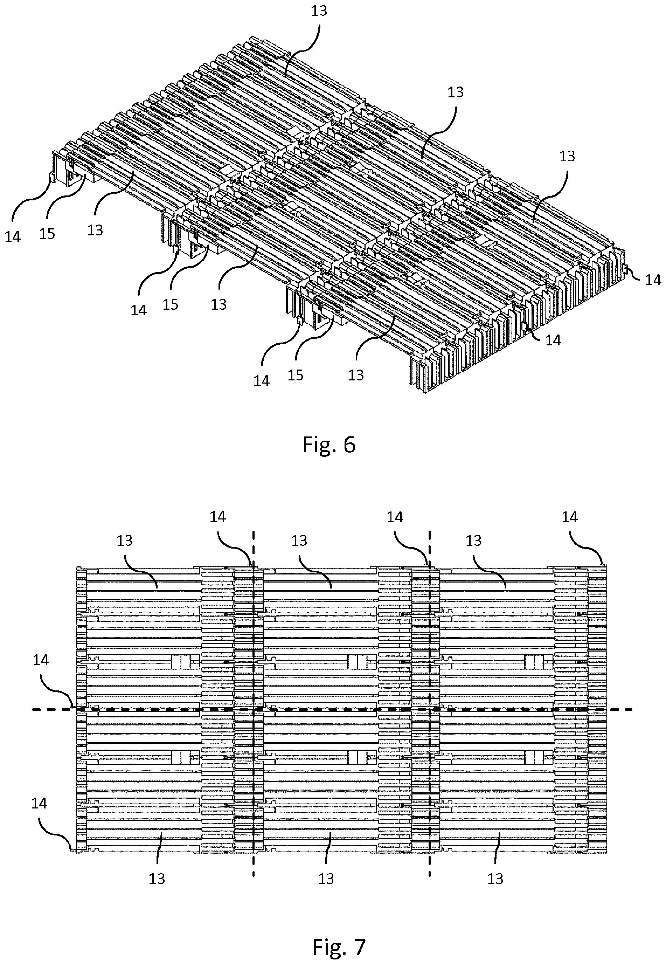

In den Fig. 6 und 7 ist ein Berührschutzsystem dargestellt, das aus sechs identisch ausgebildeten Berührschutzeinrichtungen 13 gemäß den Figuren 1 bis 5 gebildet ist. Die in der Fig. 7 eingezeichneten strichlierten Linien dienen lediglich der Kenntlichmachung der einzelnen Berührschutzmodule. Das Berührschutzsystem dient dem Abdecken von einer Anordnung von drei parallel angeordneten Stromschienen 15. Dabei bilden je zwei Berührschutzmodule einen gemeinsamen Aufnahmebereich für eine der drei Stromschienen 15.

Die jeweilige Berührschutzeinrichtung 13 weist mehrere Formschlussmittel 14 auf, wobei diese Formschlussmittel 14 mit benachbart angeordneten Berührschutzmodulen derart zusammenwirken, dass ein Verschieben der Berührschutzmodule zueinander in der Längsrichtung der Stromschienen 15 verhindert ist. Das jeweilige Berührschutzmodul weist ein plattenförmiges erstes Formschlussmittel 14 und ein hakenförmiges zweites Formschlussmittel 14 auf, wobei das erste Formschlussmittel 14 an dem einen Stirnabschnitt 17 und das zweite Formschlussmittel 14 an dem anderen Stirnabschnitt 17 ausgebildet ist. Das jeweilige Formschlussmittel 14 ist derart ausgebildet, dass es mit dem Stirnabschnitt 17 eines benachbart angeordneten Berührschutzmoduls zusammenwirkt.

Die jeweilige Berührschutzeinrichtung 13 bzw. das jeweilige Berührschutzmodul, weist mehrere Segmente 11 auf, wobei der Abdeckkörper 1 zwischen einander angrenzenden Segmenten 11 eine Materialschwächung 12 aufweist.

### Bezugszeichenliste

- 1: Abdeckkörper
- 2: Abdeckabschnitt
- 3: Führungsabschnitt
- 4: Aufnahmebereich
- 5: Halteelement
- 6: Halteabschnitt
- 7: Halteabschnitt
- 8: Führungsschlitz
- 9: Entnahmeabschnitt
- 10: Kopfabschnitt
- 11: Segment
- 12: Materialschwächung
- 13: Berührschutzeinrichtung
- 14: Formschlussmittel
- 15: Stromschiene
- 16: Kontaktierungsschlitz
- 17: Stirnabschnitt
- 18: Führungsnut

## Patentansprüche

1. Berührschutzeinrichtung (13) für eine Stromschiene (15), wobei die Berührschutzeinrichtung (13) einen Abdeckkörper (1) aufweist, wobei der Abdeckkörper (1) einen Aufnahmebereich (4) zum Aufnehmen der Stromschiene (15) aufweist, wobei der Abdeckkörper (1) einen Abdeckabschnitt (2) zum frontseitigen Abdecken der Stromschiene (15) aufweist, wobei der Abdeckkörper (1) einen Halteabschnitt (7) aufweist, wobei ein Teilbereich des Halteabschnitts (7) des Abdeckkörpers (1) bei in dem Aufnahmebereich (4) angeordneter Stromschiene (15) die Stromschiene (15) auf einer dem Abdeckabschnitt (2) abgewandten Seite hintergreift, wobei die Berührschutzeinrichtung (13) ein Halteelement (5) aufweist, wobei das Halteelement (5) geeignet ist, ein unbeabsichtigtes Lösen der Berührschutzeinrichtung von der Stromschiene (15) zu verhindern, **dadurch gekennzeichnet, dass** das Halteelement (5) in einem Führungsabschnitt (3) des Abdeckkörpers (1) verschiebbar gelagert ist, zur Veränderung eines Abstands zwischen dem Halteabschnitt (7) und dem Halteelement (5), wobei das Halteelement (5) in zumindest einer Verschiebestellung formschlüssig mit dem Abdeckkörper (1) zusammenwirkt.

2. Berührschutzeinrichtung (13) nach Anspruch 1, wobei das Halteelement (5) in zumindest einer Verschiebestellung rastierend mit dem Abdeckkörper (1) zusammenwirkt.

3. Berührschutzeinrichtung (13) nach Anspruch 2, wobei das Halteelement (5) in mehreren Verschiebestellungen formschlüssig, insbesondere rastierend mit dem Abdeckkörper (1) zusammenwirkt.

4. Berührschutzeinrichtung (13) nach einem der Ansprüche 1 bis 3, wobei ein Teilbereich eines Halteabschnitts (6) des Halteelements (5) bei in dem Aufnahmebereich (4) angeordneter Stromschiene (15) die Stromschiene (15) auf der dem Abdeckabschnitt (2) abgewandten Seite hintergreift.

5. Berührschutzeinrichtung (13) nach einem der Ansprüche 1 bis 4, wobei der Halteabschnitt (6) des Halteelements (5) und/oder der Halteabschnitt (7) des Abdeckkörpers (1) ein stufenförmiges Profil aufweisen.

6. Berührschutzeinrichtung (13) nach einem der Ansprüche 1 bis 5, wobei der Führungsabschnitt (3) einen Führungsschlitz (8) aufweist, wobei das Halteelement (5) in dem Führungsschlitz (8) verschiebbar geführt ist.

7. Berührschutzeinrichtung (13) nach Anspruch 6, wobei der Abdeckkörper (1) einen in den Führungsschlitz (8) mündenden Entnahmeabschnitt (9) aufweist, zum Entnehmen und Einführen des Halteelements (5).

8. Berührschutzeinrichtung (13) nach Anspruch 7, wobei das Halteelement (5) im Bereich des Entnahmeabschnitts (9) quer zu der Verschieberichtung, insbesondere senkrecht zu der Verschieberichtung entnehmbar und einführbar ist.

9. Berührschutzeinrichtung (13) nach Anspruch 7 oder 8, wobei der Entnahmeabschnitt (9) eine den Abdeckkörper (1) dursetzende, an den Führungsschlitz (8) angrenzende Öffnung aufweist, wobei die Öffnung eine gegenüber dem angrenzenden Führungsschlitz (8) größere Breitenerstreckung aufweist.

10. Berührschutzeinrichtung (13) nach einem der Ansprüche 1 bis 9, wobei das Halteelement (5) einen Kopfabschnitt (10) aufweist, wobei der Führungsabschnitt (3) eine Führungsnut (18) zur Aufnahme des Kopfabschnitts (10) aufweist.

11. Berührschutzeinrichtung (13) nach einem der Ansprüche 1 bis 10, wobei der Abdeckkörper (1) parallel angeordnete Kontaktierungsschlitze (16) aufweist, zur elektrischen Kontaktierung der Stromschiene (15) mittels einer Anschlussklemme.

12. Berührschutzeinrichtung (13) nach Anspruch 11, wobei der Abdeckkörper (1) zwei bezüglich des Aufnahmebereichs (4) gegenüberliegend ausgebildete Stirnabschnitte (17) aufweist, wobei einer der Stirnabschnitte (17) einen Einführbereich zum Einführen der Anschlussklemme aufweist.

13. Berührschutzeinrichtung (13) nach einem der Ansprüche 1 bis 12, wobei der Abdeckkörper (1) mehrere Segmente (11) aufweist, wobei der Abdeckkörper (1) zwischen aneinander angrenzenden Segmenten (11) eine Materialschwächung (12) aufweist.

14. Berührschutzeinrichtung (13) nach einem der Ansprüche 1 bis 13, wobei die Berührschutzeinrichtung (13) als Berührschutzmodul ausgebildet ist, wobei das Berührschutzmodul einen einzigen Aufnahmebereich (4) aufweist.

15. Berührschutzsystem umfassend zumindest zwei Berührschutzeinrichtungen (13) nach Anspruch 14, wobei die Berührschutzmodule (13) derart angeordnet sind, das die Aufnahmebereiche (4) der Berührschutzmodule (13) einen gemeinsamen Aufnahmebereich zur Aufnahme derselben Stromschiene (15) bilden, wobei Formschlussmittel (14) der Berührschutzmodule (13) ein Verschieben der Berührschutzmodule (13) zueinander in einer Längsrichtung der Stromschiene (15) verhindern, oder wobei die Berührschutzmodule (13) derart angeordnet sind, dass die Aufnahmebereiche (4) der Berührschutzmodule (13) zwei voneinander beabstandete Aufnahmebereiche bilden, zur Aufnahme von jeweils einer Stromschiene (15), wobei Formschlussmittel (14) der Berührschutzmodule (13) ein Verschieben der Berührschutzmodule (13) zueinander in einer Längsrichtung der Stromschienen (15) verhindern.

## Claims

1. Electric shock protection device (13) for a busbar (15), wherein the electric shock protection device (13) comprises a covering body (1), wherein the covering body (1) comprises a receptacle region (4) for receiving the busbar (15), wherein the covering body (1) comprises a covering portion (2) for covering the busbar (15) on the front side, wherein the covering body (1) comprises a holding portion (7), wherein a partial region of the holding portion (7) of the covering body (1), with the busbar (15) arranged in the receptacle region (4), engages behind the busbar (15) on a side facing away from the covering portion (2), wherein the electric shock protection device (13) comprises a holding element (5), wherein the holding element (5) is suitable for preventing unintentional release of the electric shock protection device from the busbar (15), **characterized in that** the holding element (5) is mounted displaceably in a guide portion (3) of the covering body (1), for the purpose of changing a distance between the holding portion (7) and the holding element (5), wherein the holding element (5) cooperates with the covering body (1) in a form-fitting manner in at least one displacement position.

2. Electric shock protection device (13) according to Claim 1, wherein the holding element (5) cooperates with the covering body (1) in a latching manner in at least one displacement position.

3. Electric shock protection device (13) according to Claim 2, wherein the holding element (5) cooperates with the covering body (1) in a form-fitting manner, in particular in a latching manner, in a plurality of displacement positions.

4. Electric shock protection device (13) according to any of Claims 1 to 3, wherein a partial region of a holding portion (6) of the holding element (5), with the busbar (15) arranged in the receptacle region (4), engages behind the busbar (15) on the side facing away from the covering portion (2).

5. Electric shock protection device (13) according to any of Claims 1 to 4, wherein the holding portion (6) of the holding element (5) and/or the holding portion (7) of the covering body (1) have/has a stepped profile.

6. Electric shock protection device (13) according to any of Claims 1 to 5, wherein the guide portion (3) comprises a guide slot (8), wherein the holding element (5) is guided displaceably in the guide slot (8).

7. Electric shock protection device (13) according to Claim 6, wherein the covering body (1) comprises a removal portion (9) leading into the guide slot (8), for removing and inserting the holding element (5).

8. Electric shock protection device (13) according to Claim 7, wherein the holding element (5) is removable and insertable in the region of the removal portion (9) transversely with respect to the displacement direction, in particular perpendicularly to the displacement direction.

9. Electric shock protection device (13) according to Claim 7 or 8, wherein the removal portion (9) comprises an opening passing through the covering body (1) and adjoining the guide slot (8), wherein the opening has a larger width extent than the adjoining guide slot (8).

10. Electric shock protection device (13) according to any of Claims 1 to 9, wherein the holding element (5) comprises a head portion (10), wherein the guide portion (3) comprises a guide groove (18) for receiving the head portion (10).

11. Electric shock protection device (13) according to any of Claims 1 to 10, wherein the covering body (1) comprises contacting slots (16) arranged parallel, for electrical contacting of the busbar (15) by means of a connection terminal.

12. Electric shock protection device (13) according to Claim 11, wherein the covering body (1) comprises two end portions (17) formed oppositely in relation to the receptacle region (4), wherein one of the end portions (17) comprises an insertion region for inserting the connection terminal.

13. Electric shock protection device (13) according to any of Claims 1 to 12, wherein the covering body (1) comprises a plurality of segments (11), wherein the covering body (1) comprises a material weakening (12) between segments (11) that adjoin one another.

14. Electric shock protection device (13) according to any of claims 1 to 13, wherein the electric shock protection device (13) is designed as an electric shock protection module, wherein the electric shock protection module comprises a single receptacle region (4).

15. Electric shock protection system comprising at least two electric shock protection devices (13) according to Claim 14, wherein the electric shock protection modules (13) are arranged in such a way that the receptacle regions (4) of the electric shock protection modules (13) form a common receptacle region for receiving the same busbar (15), wherein form-fitting means (14) of the electric shock protection modules (13) prevent the electric shock protection modules (13) from being displaced with respect to one another in a longitudinal direction of the busbar (15), or wherein the electric shock protection modules (13) are arranged in such a way that the receptacle regions (4) of the electric shock protection modules (13) form two receptacle regions spaced apart from one another, each for receiving a busbar (15), wherein form-fitting means (14) of the electric shock protection modules (13) prevent the electric shock protection modules (13) from being displaced with respect to one another in a longitudinal direction of the busbars (15).

## Revendications

1. Dispositif de protection contre les contacts (13) pour un rail électrique (15), dans lequel le dispositif de protection contre les contacts (13) comporte un corps de recouvrement (1), dans lequel le corps de recouvrement (1) comporte une zone de réception (4) destinée à recevoir le rail électrique (15), dans lequel le corps de recouvrement (1) comporte une partie de recouvrement (2) pour le recouvrement frontal du rail électrique (15), dans lequel le corps de recouvrement (1) comporte une partie de maintien (7), dans lequel une zone partielle de la partie de maintien (7) du corps de recouvrement (1) s'engage derrière le rail électrique (15) sur un côté opposé à la partie de recouvrement (2) lorsque le rail électrique (15) est disposé dans la zone de réception (4), dans lequel le dispositif de protection contre les contacts (13) comporte un élément de maintien (5), dans lequel l'élément de maintien (5) est apte à empêcher un détachement involontaire du dispositif de protection contre les contacts du rail électrique (15),
**caractérisé en ce que** l'élément de maintien (5) est monté coulissant dans une partie de guidage (3) du corps de recouvrement (1), pour modifier une distance entre la partie de maintien (7) et l'élément de maintien (5), dans lequel l'élément de maintien (5) coopère par complémentarité de forme avec le corps de recouvrement (1) dans au moins une position de déplacement.

2. Dispositif de protection contre les contacts (13) selon la revendication 1, dans lequel l'élément de maintien (5) coopère par encliquetage avec le corps de recouvrement (1) dans au moins une position de déplacement.

3. Dispositif de protection contre les contacts (13) selon la revendication 2, dans lequel l'élément de maintien (5) coopère par complémentarité de forme, notamment par encliquetage, avec le corps de recouvrement (1) dans plusieurs positions de déplacement.

4. Dispositif de protection contre les contacts (13) selon l'une des revendications 1 à 3, dans lequel une zone partielle d'une partie de maintien (6) de l'élément de maintien (5) s'engage derrière le rail électrique (15) sur le côté opposé à la partie de recouvrement (2) lorsque le rail électrique (15) est disposé dans la zone de réception (4).

5. Dispositif de protection contre les contacts (13) selon l'une des revendications 1 à 4, dans lequel la partie de maintien (6) de l'élément de maintien (5) et/ou la partie de maintien (7) du corps de recouvrement (1) présentent un profil en forme de gradin.

6. Dispositif de protection contre les contacts (13) selon l'une des revendications 1 à 5, dans lequel la partie de guidage (3) comporte une fente de guidage (8), dans lequel l'élément de maintien (5) est guidé de manière coulissante dans la fente de guidage (8).

7. Dispositif de protection contre les contacts (13) selon la revendication 6, dans lequel le corps de recouvrement (1) comporte une partie d'extraction (9) débouchant dans la fente de guidage (8), pour l'extraction et l'introduction de l'élément de maintien (5).

8. Dispositif de protection contre les contacts (13) selon la revendication 7, dans lequel l'élément de maintien (5) peut être extrait et introduit dans la zone de la partie d'extraction (9) transversalement à la direction de déplacement, en particulier perpendiculairement à la direction de déplacement.

9. Dispositif de protection contre les contacts (13) selon la revendication 7 ou 8, dans lequel la partie d'extraction (9) comporte une ouverture traversant le corps de recouvrement (1) et adjacente à la fente de guidage (8), dans lequel l'ouverture présente une étendue en largeur supérieure à celle de la fente de guidage (8) adjacente.

10. Dispositif de protection contre les contacts (13) selon l'une des revendications 1 à 9, dans lequel l'élément de maintien (5) comporte une partie de tête (10), dans lequel la partie de guidage (3) comporte une rainure de guidage (18) destinée à recevoir la partie de tête (10).

11. Dispositif de protection contre les contacts (13) selon l'une des revendications 1 à 10, dans lequel le corps de recouvrement (1) présente des fentes de mise en contact (16) disposées en parallèle, pour la mise en contact électrique du rail électrique (15) au moyen d'une borne de raccordement.

12. Dispositif de protection contre les contacts (13) selon la revendication 11, dans lequel le corps de recouvrement (1) comporte deux parties frontales (17) configurées de manière opposée par rapport à la zone de réception (4), dans lequel l'une des parties frontales (17) comporte une zone d'introduction pour l'introduction de la borne de raccordement.

13. Dispositif de protection contre les contacts (13) selon l'une des revendications 1 à 12, dans lequel le corps de recouvrement (1) comporte plusieurs segments (11), dans lequel le corps de recouvrement (1) présente un affaiblissement de matériau (12) entre des segments (11) adjacents les uns aux autres.

14. Dispositif de protection contre les contacts (13) selon l'une des revendications 1 à 13, dans lequel le dispositif de protection contre les contacts (13) est réalisé sous la forme d'un module de protection contre les contacts, dans lequel le module de protection contre les contacts comporte une zone de réception (4) unique.

15. Système de protection contre les contacts comprenant au moins deux dispositifs de protection contre les contacts (13) selon la revendication 14, dans lequel les modules de protection contre les contacts (13) sont disposés de telle sorte que les zones de réception (4) des modules de protection contre les contacts (13) forment une zone de réception commune pour la réception d'un même rail électrique (15), dans lequel des moyens d'engagement par complémentarité de forme (14) des modules de protection contre les contacts (13) empêchent un déplacement des modules de protection contre les contacts (13) les uns par rapport aux autres dans une direction longitudinale du rail électrique (15), ou dans lequel les modules de protection contre les contacts (13) sont disposés de telle sorte que les zones de réception (4) des modules de protection contre les contacts (13) forment deux zones de réception espacées l'une de l'autre, permettant respectivement la réception d'un rail électrique (15), dans lequel des moyens d'engagement par complémentarité de forme (14) des modules de protection contre les contacts (13) empêchent un déplacement des modules de protection contre les contacts (13) les uns par rapport aux autres dans une direction longitudinale des rails électriques (15).
